# EUROPEAN PATENT APPLICATION

(11) **EP 3 611 074 A1**
(43) Date of publication of application: **19.02.2020**
(21) Application number: 18912478.7
(22) Date of filing: 23.11.2018
(51) Int. Cl.: B62B 5/02

(54) **COLLAPSIBLE STAIR-CLIMBING CART**

(30) Priority: 30.03.2018 CN 201810291411; 30.03.2018 CN 201820446082 U
(71) Applicant: GUANG DONG SHUN HE INDUSTRIAI CO., LTD, YANGJIANG, Guangdong 529565 (CN)
(72) Inventor: JIAN, Shikun, Yangjiang, Guangdong 529500 (CN)
(74) Representative: Petraz, Gilberto Luigi
(86) International application number: PCT/CN2018/117159
(87) International publication number: WO 2019/184405

(57) **Abstract**

The present invention discloses a folding stair-climbing trolley comprising a bracket, wherein two insertion posts at a lower end of the bracket are sequentially inserted into a sliding sleeve, a sliding inner sleeve, a supporting sleeve, a toothed tube sleeve, a torsion spring and a foot stand, and ends of the two insertion posts at the lower end of the bracket are rotatably connected to both ends of a blade; a lower end of a supporting seat is connected to a lower portion of a rotating block and is located at an upper side of a connection point between the foot stand and the rotating block; an upper end of the rotating block is connected to a tripod, and three ends of the tripod are rotatably connected to rollers. The folding stair-climbing trolley may realize the function of moving on the stairs by providing three rollers. And the supporting sleeve and foot stand provided can be rotated, which may faciliate the tripods on both sides to be turned over and folded inward to realize the function of storaging the rollers, saving the space for storaging the trolley. By providing the oblique openings at the upper end of the foot stand and the lower end of the toothed tube sleeve, and providing the torsion spring inside the foot stand, the rotating thrust of the torsion spring faciliates the unfolding of the tripods.

## Description

### TECHNICAL FIELD

The present invention belongs to the technical field of trolleys, and specifically, relates to a folding stair-climbing trolley.

### BACKGROUND

Most of the existing trolleys are only provided with two wheels, which is convenient for carrying the goods on flat road surface. However, once the transportation between the upper and lower floors is needed, it is very troublesome when there is no elevator. The existing trolleys cannot be moved on the stairs at all, and does not have the function of folding wheels. Storage and transportation of the trolleys are very space-consuming.

### SUMMARY

The objective of the present invention is to provide a folding stair-climbing trolley to solve the problems set forth in the background above.

In order to achieve the above objective, the present invention provides the following technical solution.

A folding stair-climbing trolley comprising a bracket, wherein two insertion posts at a lower end of the bracket are sequentially inserted into a sliding sleeve, a sliding inner sleeve, a supporting sleeve, a toothed tube sleeve, a torsion spring and a foot stand, and ends of the two insertion posts at the lower end of the bracket are rotatably connected to both ends of a blade; the torsion spring is provided inside the foot stand and a lower end of the torsion spring is fixed inside the foot stand; the toothed tube sleeve is fixed on the insertion post on the lower end of the bracket by a screw and an upper end of the torsion spring is fixedly connected onto the screw; the sliding sleeves are connected with each other by a middle connecting tube between the sliding sleeves; an outer side of the sliding sleeve is connected to an upper end of a connecting rod; a lower end of the connecting rod is connected onto the blade; one side of the supporting sleeve is connected to an upper end of a supporting seat; one side of the foot stand is connected to a lower end of a rotating block; a lower end of the supporting seat is connected to a lower portion of the rotating block and is located at an upper side of a connection point between the foot stand and the rotating block; an upper end of the rotating block is connected to a tripod, and three ends of the tripod are rotatably connected to rollers.

Preferably, a sliding plate is slidably sleeved on an upper end of the bracket; the sliding plate is fixedly connected with a telescopic armrest frame; and the telescopic armrest frame slidably passes through a horizontal plate on the upper end of the bracket.

Preferably, an upper end of the foot stand and a lower end of the toothed tube sleeve are both provided with symmetric oblique openings, and the oblique openings matches each other.

The present invention has these technical effects and advantages: the folding stair-climbing trolley has reasonable structure and strong practicability, and the function of moving on the stairs can be realized by providing three rollers. And the supporting sleeve and foot stand provided can be rotated, which may faciliate the tripods on both sides to be turned over and folded inward to realize the function of storaging the rollers, saving the space for storaging the trolley. By providing the oblique openings at the upper end of the foot stand and the lower end of the toothed tube sleeve, and providing the torsion spring inside the foot stand, the rotating thrust of the torsion spring faciliates the unfolding of the tripods.

### BRIEF DESCRIPTION OF THE DRAWINGS

FIG. 1 is an exploded schematic structural view according to the present invention;
FIG. 2 is a partial enlarged schematic structural view of the present invention;
FIG. 3 is a schematic structural view of folded structured of the present invention.

In the figures, the reference numbers are as follows:
1 bracket, 2 sliding plate, 3 telescopic armrest frame, 4 middle connecting tube, 5 sliding inner sleeve, 6 supporting sleeve, 7 toothed tube sleeve, 8 torsion spring, 9 foot stand, 10 blade, 11 connecting rod, 12 supporting seat, 13 rotating block, 14 tripod, 15 roller, 16 sliding sleeve

### DETAILED DESCRIPTION

The technical solutions in the embodiments of the present invention are clearly and completely described in the following with reference to the accompanying drawings in the embodiments of the present invention. It is obvious that the described embodiments are only a part of the embodiments of the present invention, but not all embodiments. All other embodiments obtained by those skilled in the art based on the embodiments of the present invention without creative efforts falls within the protection scope of the present invention.

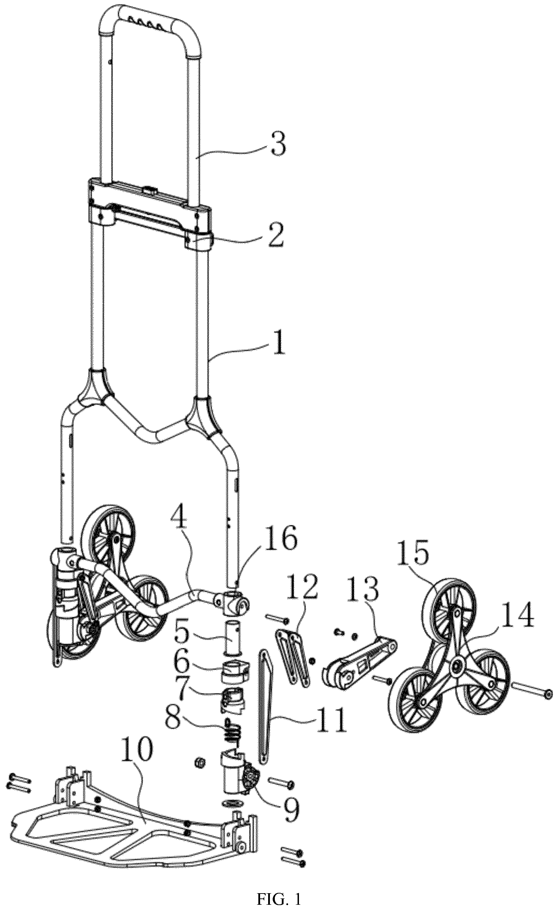

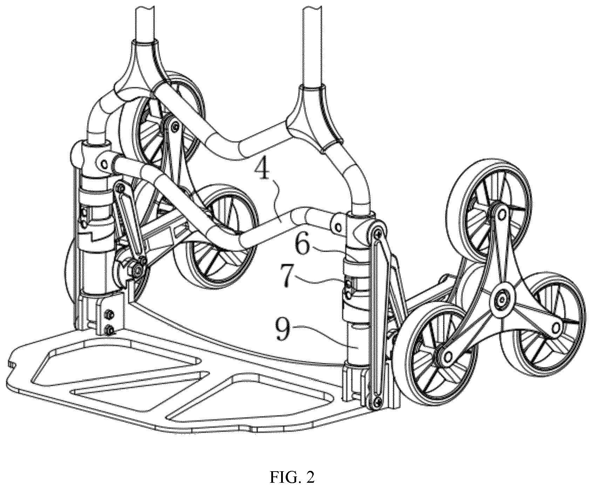

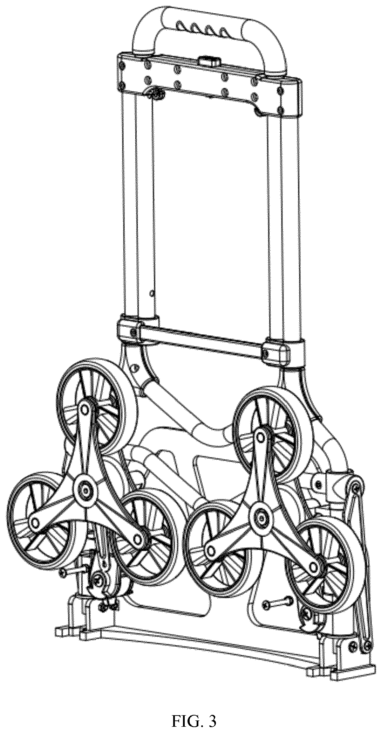

The present invention provides a folding stair-climbing trolley as shown in FIGS. 1-3, which comprises a bracket 1. Two insertion posts at a lower end of the bracket 1 are sequentially inserted into a sliding sleeve 16, a sliding inner sleeve 5, a supporting sleeve 6, a toothed tube sleeve 7, a torsion spring 8 and a foot stand 9, and ends of the two insertion posts at the lower end of the bracket 1 are rotatably connected to both ends of a blade 10. The torsion spring 8 is provided inside the foot stand 9 and a lower end of the torsion spring 8 is fixed inside the foot stand 9. The toothed tube sleeve 7 is fixed on the insertion post on the lower end of the bracket 1 by a screw and an upper end of the torsion spring 8 is fixedly connected onto the screw. The sliding sleeves 16 are connected with each other by a middle connecting tube 4 between the sliding sleeves 16. An outer side of the sliding sleeve 16 is connected to an upper end of a connecting rod 11. A lower end of the connecting rod 11 is connected onto the blade 10. One side of the supporting sleeve 6 is connected to an upper end of a supporting seat 12. One side of the foot stand 9 is connected to a lower end of a rotating block 13. A lower end of the supporting seat 12 is connected to a lower portion of the rotating block 13 and is located at an upper side of a connection point between the foot stand 9 and the rotating block 13. An upper end of the rotating block 13 is connected to a tripod 14, and three ends of the tripod 14 are rotatably connected to rollers 15.

Specifically, a sliding plate 2 is slidably sleeved on an upper end of the bracket 1. The sliding plate 2 is fixedly connected with a telescopic armrest frame 3. The telescopic armrest frame 3 slidably passes through a horizontal plate on the upper end of the bracket 1.

Specifically, an upper end of the foot stand 9 and a lower end of the toothed tube sleeve 7 are both provided with symmetric oblique openings, and the oblique openings matches each other.

The function of moving on the stairs can be realized by providing three rollers 15. And the supporting sleeve 6 and foot stand 9 provided can be rotated, which may faciliate the tripods 14 on both sides to be turned over and folded inward to realize the function of storaging the rollers 15. And the blade 10 may also be turned over and folded. By providing the symmetric oblique openings at the upper end of the foot stand 9 and the lower end of the toothed tube sleeve 7, and providing the torsion spring 8 inside the foot stand 9, the rotating thrust of the torsion spring 8 and the interaction force between the oblique openings faciliates the unfolding of the tripods 14, when the foot stand 9 is rotated.

It should be noted that the above description is only preferred embodiments of the present invention and is not intended to limit the present invention. Although the present invention has been described in detail with reference to the foregoing embodiments. For those skilled in the art, modifications still may be made to the technical solutions described in each foregoing embodiments, or equivalent substitutions still may be made to some of the technical features therein. And any modifications, equivalent substitutions, improvements, etc., which are made within the spirit and principles of the present invention, should be included within the protection scope of the present invention.

## Claims

1. A folding stair-climbing trolley comprising a bracket (1), **characterized in that**, two insertion posts at a lower end of the bracket (1) are sequentially inserted into a sliding sleeve (16), a sliding inner sleeve (5), a supporting sleeve (6), a toothed tube sleeve (7), a torsion spring (8) and a foot stand (9), and ends of the two insertion posts at the lower end of the bracket (1) are rotatably connected to both ends of a blade (10); the torsion spring (8) is provided inside the foot stand (9) and a lower end of the torsion spring (8) is fixed inside the foot stand (9); the toothed tube sleeve (7) is fixed on the insertion post on the lower end of the bracket (1) by a screw and an upper end of the torsion spring (8) is fixedly connected onto the screw; the sliding sleeves (16) are connected with each other by a middle connecting tube (4) between the sliding sleeves (16); an outer side of the sliding sleeve (16) is connected to an upper end of a connecting rod (11); a lower end of the connecting rod (11) is connected onto the blade (10); one side of the supporting sleeve (6) is connected to an upper end of a supporting seat (12); one side of the foot stand (9) is connected to a lower end of a rotating block (13); a lower end of the supporting seat (12) is connected to a lower portion of the rotating block (13) and is located at an upper side of a connection point between the foot stand (9) and the rotating block (13); an upper end of the rotating block (13) is connected to a tripod (14), and three ends of the tripod (14) are rotatably connected to rollers (15).

2. The folding stair-climbing trolley according to claim 1, wherein a sliding plate (2) is slidably sleeved on an upper end of the bracket (1); the sliding plate (2) is fixedly connected with a telescopic armrest frame (3); and the telescopic armrest frame (3) slidably passes through a horizontal plate on the upper end of the bracket (1).

3. The folding stair-climbing trolley according to claim 1, wherein an upper end of the foot stand (9) and a lower end of the toothed tube sleeve (7) are both provided with symmetric oblique openings, and the oblique openings matches each other.
